# EUROPEAN PATENT SPECIFICATION

(11) **EP 2 311 629 B1**
(45) Date of publication and mention of the grant of the patent: **25.05.2011**
(21) Application number: 09013080.8
(22) Date of filing: 16.10.2009
(51) Int. Cl.: B29D 24/00, B32B 3/12, B60R 5/04, B60R 13/02, B60R 13/08

(54) **Honeycomb sandwich construction for the automotive industry**
Sandwichkonstruktion mit Wabenkern für die Automobilindustrie
Construction de type sandwich avec nid d'abeille pour l'industrie automobile

(43) Date of publication of application: 20.04.2011
(73) Proprietor: Rieter Technologies AG, 8406 Winterthur (CH)
(72) Inventor: Delmas, Bertrand, 8406 Winterthur (CH)

(56) References cited:
- EP-A2- 1 182 087
- EP-B1- 1 255 663
- WO-A1-97/32752

## Description

The present invention relates to a sandwich construction for the automotive industry and a method of producing it. Sandwich panels are typically made of skins or face layers that are bonded to opposite sides of a core material, such as a honeycomb, to form a sandwich panel.

In the automotive industry, sandwich panels are used in a wide variety of applications where high strength and lightweight are required. For instance sandwich panels with a paper or thermoplastic honeycomb core and with glass fibre or natural fibre mat reinforced skins are used in sunroof panels, hard tops, parcel shelves, spare wheel covers and luggage floor assemblies.

Sandwich constructions use the fact that the core of a panel that is loaded in bending does not carry much in-plane stresses and does not provide the surface of the part. The core material in the overall sandwich construction is usually relatively thick and has a much lower density compared to the skins. The primary mechanical requirement for the core layer is to prevent the movement of the skins relative to each other (in-plane and out-of-plane). Sufficient out-of-plane compression properties of the sandwich core are required to support the skins to maintain their distance from the neutral axis, to prevent them from buckling and to restrict their deformations due to local out-of-plane loads. Furthermore, sufficient out-of plane shear properties of the core are demanded to restrict in-plane displacement of the skins relative to each other due to bending moments and transverse loads. The core layer can furthermore have additional functions e.g. thermal and acoustic isolation or energy absorption during impact.

The skin layers in sandwich constructions carry the in-plane tensile/compression stresses and in-plane shear stresses. They are usually relatively thin and have a high stiffness and strength. In addition to high mechanical in-plane properties per weight the skin material usually has to fulfil also other requirements like low costs, high surface quality and good impact performance.

Structured core material can be differentiated in three different groups:
- Punctual support, e.g. a textile core, which is a fully open support,
- Unidirectional support, e.g. corrugated core types, which is open to one side, and
- Bi-directional support, e.g. the honeycomb core, which is open only in the thickness direction.

Structural core materials, especially honeycomb cores, have not been used that intensively in automotive applications, mainly due to their high price. Some headliners are made with corrugated cores. However honeycomb is a popular core material in those areas, where its high strength to weight ratio and resistance to fatigue failures becomes the important features. A wide variety of products including metals and composite materials have been used to make the honeycomb cores.

New processes' using cheap thermoplastic materials has now been established, reducing the price of the core material. One of the well-developed processes is the production of a tubular honeycomb via a block of extruded tubes (WO 99/41061). After the tubes are extruded, they are subsequently stacked and welded together. Known extruded plastics materials are for instance polypropylene (PP), polycarbonate (PC).

Another out-of-plane extruded core is the hexagonal honeycomb produced by companies InduplastlNidacore (WO 87/00119). After small blocks of honeycombs are extruded, they are welded to bigger blocks and cut to the preferred size honeycomb.

WO9716304 discloses a different way of producing honeycombs, for instance made of PP or polyethylene terephthalate (PET) honeycombs. Each honeycomb is created separately by contact welding with moving tools. With this method it is also possible to produce thermoplastic honeycomb from nonwoven fabrics. Other types of production methods are based on the expansion technology, whereby a stack of welded strips is expanded to form the actual honeycomb structure, e.g. WO0151273. A further production process for honeycomb structures using strip material is a weaving process as disclosed in W00100397.

Another production process as disclosed in WO0032382 for honeycomb structures is based on the use of thermoplastic film. The film is first formed in a rotational forming unit and additionally folded to form the honeycomb structure. Finally the folded structure is welded together to set the structure and obtain the final product.

Applications for these tubular honeycomb cores as well as other out-of-plane extruded honeycombs have been used in a variety of structural applications, e.g. an automotive spare wheel cover where the PP tubular core is combined with glass fibre reinforced PP skins. The mechanical properties depend largely on the core density and the tubes diameter.

An important consideration in the formation of any sandwich panel is the way in which the face sheets are bonded to the honeycomb. Typically an adhesive is used to bond the face sheet to the core. The adhesive must rigidly attach the facings or skins to the core in order for loads to be transmitted from one facing to the other and to permit the structure to fulfil all the assumptions implied in the acceptance of the commonly used stress calculation methods. If the adhesive fails, the strength of the panel is severely compromised. The adhesive is especially critical in sandwich panels which use honeycomb as the core because of the relative small surface area over which the edges of the honeycomb contact the face sheets.

For instance WO 97/32752 discloses a sandwich panel for a headliner with a honeycomb core and one needled non-woven layer applied on either side of the core. The needled non-woven layers are preferably formed with 100% blended polyester of combined low melt and high melt fibers. The honeycomb material is preferably made of polyester. The sandwich panels comprise one or more additional layers on either side.

One procedure of applying composite face sheets to honeycomb involves forming a prepreg sheet that includes at least one fibrous reinforcement layer and an uncured resin matrix. Prepreg is a term of art used in the composite materials industry to identify mat, fabric, non-woven material, tow or roving which has been pre-impregnated with resin and which is ready for final curing. A film adhesive is typically added to the prepreg-core assembly and it is then bonded to the honeycomb by curing of both the prepreg resin and adhesive resin at required temperature. The film adhesive can be applied as a separate ply layer or as an integral part of the prepreg sheet.

Honeycomb sandwich panels are used in many applications where stiffness and structural strength of the panel are primary considerations. Additionally, honeycomb sandwich panels are also widely used in the automotive industry where lightweight is of primary importance. As a result, there has been and continues to be a concerted effort to reduce the weight of the honeycomb sandwich panels without sacrificing structural strength. One area, which has been investigated to reduce weight, is the elimination of separate adhesive layers. This has been accomplished by making the face sheets from composite materials that are self-adhesive. The resins used in such self-adhesive prepregs must meet the dual requirements of providing suitable structural strength while still providing adequate adhesion to the honeycomb.

An alternative method of bonding face sheets to honeycomb involves applying an adhesive to the edge of the honeycomb. The adhesive is typically applied by "dipping" the edge of the honeycomb in the adhesive. The adhesives used in this type of bonding are typically referred to as "dip" resins or adhesives. The advantage of this method is that the adhesive is located only where the honeycomb contacts the face sheet, rather than being distributed over the entire face sheet. This method is generally used to bond non-adhesive face sheets, such as aluminium and other metallic face sheets, to the honeycomb.

All the sandwich constructions for the automotive applications have in common, that they are made as a stack of multiple layers of different materials. For instance in US6676199 a sandwich construction for lightweight vehicle flooring is disclosed which at least has a core made of a cardboard honeycomb and skins made of needled nonwoven of glass fibres and PET fibres bonded with Resol, or an impregnated glass mat with a bitumous styrene. Such combination of materials is difficult to recycle and therefore expensive to dispose. The materials are partly sensitive to storage conditions prior to conversion. Furthermore the production process of such a product is expensive and time consuming, making the use of such products less likely in applications where the price is the most important factor.

In US6569509 discloses a honeycomb core construction with 2 face layers. The sandwich construction is used as a lining with additional shock absorbing properties, in particularly the construction disclosed, should be able to compress under a compression force for instance during a car crash. At the same time the lining should have sound attenuation properties. The construction as disclosed contains 2 different skin layers, the first skin layer is a micro porous stiffening layer with an airflow resistance of between 900 Nsm³ and 2000 Nsm³, a flexural strength of between 0.027 Nm and 0.275 Nm and a weight per unit area of between 0.3 and 0.7 kg/m², for obtaining a good sound absorption. The second site of the core structure is disclosed as a base layer and can be made of a porous PP nonwoven, PE nonwoven or a composite nonwoven made of chemical and natural fibers. The actual compression behaviour is coming from the core per se and is not enhanced by the skins chosen. However according to the description it may contribute to the entire fitting assembly being self-supporting. This stiffening layer may take the form of a highly compacted nonwoven layer of polypropylene eventually combined with other layers like decorative layers, carpets etc.

EP1255663 discloses a self-supporting parcel shelf with honeycomb core layer and two skin layers, whereby the skin layers are made of pre compressed thermoplastic fibres. The skin layers as disclosed are made of at least 50% of polypropylene PP fibres, either made entirely of PP or made as bicomponent fibres of PP sheath and PET core and additional reinforcement fibres like glass fibres, polyester fibres or aramide fibres. The reinforcing layers have an area weight of between 300-1200 g/m². Eventually a connection layer between the reinforcement layer and the core can be used for instance a SMMS layer made of PP (spunbond-meltblown-meltblown-spunbond) with area weight of 20-50 g/m².

The most commonly used materials contain at least glass fibres to obtain the strength necessary for automotive applications. Glass fibres are unwanted because of the health risk during the production as well as because glass fibres sticking out of a product can cause skin problems upon contact. Particularly for automotive parts that are used inside the car like parcel shelf or load floor this poses a problem. Due to the lower melting temperature of PP, this material is disadvantage in uses with high heat exposure, for instance in the engine bay but also in the interior of the car at places which are directly at a window. Exposure to long times of sun radiation can also heat up the interior parts. For panels used as self supporting parts like parcel shelf or load floor this might lead to sagging.

It is therefore an object of the invention to obtain a lighter glass free construction with optimal bending stiffness, which is better recyclable and easier to produce and furthermore heat stable over longer time periods than the state of the art discussed.

This object is achieved by the sandwich construction of claim 1. Particularly by using a PET honeycomb core covered at both sides with a melt spun nonwoven made of 100% polyester bicomponent filaments compressed during moulding to form a compact layer and at the same time to form the bonding with the honeycomb core.

A web of random laid melt spun bicomponent filaments is cross-lapped and needled to form a nonwoven mat with an area weight of around 400-1000 gr.m⁻². These mats have a thickness of around 4 to 20 mm depending on the area weight needed in the final skin. After forming the skin layers have preferably a thickness of 1-5 mm.,more preferably a thickness of between 1-2.5 mm.

The melt spun filaments are coarse and preferably have a diameter in the range of 16 to 37 microns. This would be equivalent to around 3 to 15 dtex at a density of 1.38 g/_{CM}³.

By needling the cross lapped layers of the filament web, the nonwoven mat obtained can be handled, for instance for transfer to the moulding tool. Surprisingly the needling of the filament web enhances the mechanical properties of the final product significantly. By entangling the filaments, they form a stronger network leading to an increase in shear force inside the skins, enhancing the strength of the skin. In addition by heavily needling the skins, the needles leave holes in the material, which are large enough to stay during the moulding step, making the material porous and therefore enhancing the acoustic properties of the overall product. In particularly the acoustic absorption is enhanced.

It was found that the use of continuous filaments together with the needling increased the strength of the skin and therefore the overall performance of the sandwich construction extensively. Sandwich constructions with 1000 gr/m² and 850gr/m² skins showed comparable stiffness results, due to an increase in needling of the lower weight skin, by increasing the strokes and/or the amount of needles used.

Filament is defined as a continuous fibre with an indefinite length. Filaments, like defined, are also known as endless filaments or continuous filaments. In particularly excluded are cut melt-spun filaments forming staple fibres.

Bicomponent filaments may be formed of two polymers combined to form filaments having a core of one polymer and a surrounding sheath of the other polymer. In particular, the bicomponent filaments may be arranged in a sheath-core, side-by-side, islands-in-the-sea, or segmented-pie arrangement. The production of Bicomponent filament is known in the art, see for instance the Fibre Table according to P. -A. Koch (2008, Shaker Verlag, ISBN 978-38322-7037-7). Preferably, the bicomponent filaments are formed in a sheath-core arrangement in which the sheath is formed of a first polymer, which substantially surround the core formed of a second polymer. It is not required that the sheath polymer totally surround the core polymer. The first polymer has a melting point lower than the melting point of the second polymer so that upon heating the bicomponent filaments, the first and second polymers react differently. For example, when the bicomponent filaments are heated to a temperature that is above the softening or melting point of the first polymer (the sheath polymer) and below the melting point of the second polymer (the core polymer), the first polymer will soften or melt while the second polymer doesn't. This softening of the first polymer will cause the first polymer to become sticky and bond to filaments that may be in close proximity. While the core polymer stays intact and forms a network of filaments in the final product.

Preferably the bicomponent filaments used are 100% polyester based. Specific polymer combinations for the bicomponent filaments is copolyester polyethylene terepthalate /polyethylene terepthalate (coPET/PET), and glycol modified polyethylene terepthalate /polyethylene terepthalate (6PETg/PET). In case the used bicomponent filament is of the core sheath type, the first named polymer is the sheath, the second the core polymer.

The sandwich construction made of the combination of a PET core material and a coPET/PET bicomponent nonwoven is a mono-material product. A recycling of either cut-offs or the product as a whole at the end of the product lifecycle, is easier. Products can be processed to PET pellets again and can be reused in the product or in other PET containing products. In particularly, the PET used to produce the core can comprise a percentage of recycled PET. The use of a 100% polyester skin with a polyester core has the additional advantage that a binding layer between skin and core is not needed.

These and other characteristics of the invention will be clear from the following description of preferential forms, given as a non-restrictive example with reference to the attached drawings.
Figure 1 Schematic draft of the process
Figure 2 Schematic cut through a sandwich according to the invention

The melt-spun bicomponent filaments (4) are produced using a spunlaid technology (3, depicted as a box) in which the filaments are extruded, drawn and laid on a moving screen to form a web. The production of Bicomponent filament is known in the art, see for instance the Fibre Table according to P. -A. Koch (2008, Shaker Verlag, ISBN 978-38322-7037-7). The filaments are cooled and non sticky, when they touch the collecting unit (5) where they are laid in a random matter to form a web. As an example the collecting unit depicted is at the same time the distribution unit of the cross lapper.

However other configurations are possible. Under the collecting belt is normally a suction box to aid the random distribution of the filaments. Also a heating step which consolidates the filament web enough to enable transport and handling over small distances can be placed between the collecting belt and the cross lapper. The loose filament web is cross-lapped to form a thicker, heavier layer. Thanks to the cross lapping also the width of the final nonwoven mat can be adjusted. Then the cross lapped filament web is needled to form the nonwoven mat. The needling is dependent on the area weight of the loose filament web as well as on the strength that is needed in the final skin layers of the sandwich product. The material can be cut into pieces, known as blanks, or used as roll goods in the second stage of producing the sandwich.

For the sandwich the skins and the honeycomb core are layered in the wanted order and heated between two plates to a temperature, which causes the sheath of the bicomponent filaments to soften and melt. Than the stack of layers is transferred to a cold moulding tool and the product is formed under pressure. After sufficient cooling the product is taken out of the tool. Alternative heating and or moulding processes known in the art are possible, for instance using hot air or infrared instead of hot plates, cold or hot moulding processes. This is for instance dependent on the final product.

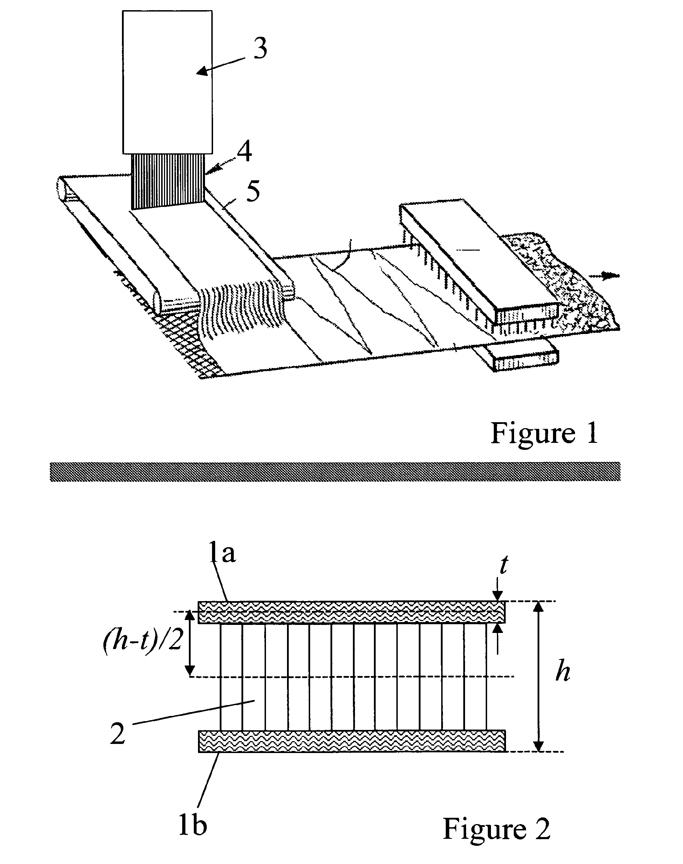

Figure 2 shows a schematic overview of the main layers of the sandwich construction according to the invention. Layers 1 a and 1 b are the skin layers made of random laid melt spun polyester bicomponent filaments, which were cross-lapped and needled to form a nonwoven mat and which were compressed during moulding of the sandwich construction to form a compact skin layer and to bond with the core. The core layer (2) is a honeycomb layer, which can be one of the honeycomb structures as discussed in the state of the art previously. Preferably the honeycomb structure is oriented such that the honeycomb is open in both directions so that the skin is connected to the rim of the honeycombs. A PET honeycomb is preferred. Together with the PET skin layers, a mono material product would be the result. Such a product would be easy to recycle. The material can be melted again and formed in PET resin to be reused for all types of PET products including the sandwich product according to the invention.

In figure 2 (h) is the overall height of the sandwich product after moulding; (t) is the thickness of the skin after moulding.

Automotive product with a sandwich construction according to the invention can be used as flooring or parcels shelf or an under body for underneath the car or an engine-cover or an engine-bay cover. The sandwich construction can also be used as cabin walls in trucks.

In addition to the sandwich material, other non-structural layers, like carpet, scrims, films etc can be added to the product either before the heating or before the cooling and forming step. These additional layers are in principle not the important layers contributing to the structural stiffness and bending properties of the sandwich as such. For instance a barrier layer in the form of a foil can be used for blocking water. For instance a sandwich construction according to the invention used as a car flooring can be covered at least partially with an additional carpet layer made of either a tufted carpet or a nonwoven carpet. When the sandwich product according to the invention is used in places with an increased temperature the panel can comprise at least partially a heat shield, for instance for uses in the engine bay or as under body underneath the car, like an under floor.

## Claims

1. Sandwich construction for automotive applications consisting of a honeycomb core covered at both sides with a skin layer **characterised in that** each of the skin layers consists of a web of random laid melt spun polyester bicomponent filaments, which was cross-lapped and needled to form a nonwoven mat and which was compressed during moulding of the sandwich construction to form a compact skin layer with bonded filaments, which is bonded to the core.

2. Sandwich construction according to claim 1, whereby the core is a polyester honeycomb construction.

3. Sandwich construction according to claim 1 or 2, whereby the melt spun filaments have a diameter in the range of 16 to 37 microns.

4. Sandwich construction according to claim 1 or 2, whereby the skin layers have an area weight of between 400 and 1200 gr.m⁻².

5. Sandwich construction according to one of the preceding claims, whereby the skin layers have a thickness of 1-3 mm, preferably 1-2.5 mm.

6. Automotive product with a sandwich construction of one of the preceding claims used as a floor or a parcels shelf or an under body or an engine-cover or an engine-bay cover or an engine shield. 4

7. Automotive product according to claim 6 comprising an additional carpet layer made of either a tufted carpet or a nonwoven carpet.

8. Automotive product according to claim 6 comprising at least partially a heat shield.

## Patentansprüche

1. Sandwichaufbau für automobile Anwendungen, der aus einem Wabenkern besteht, der an beiden Seiten mit einer Randschicht bedeckt ist, **dadurch gekennzeichnet, dass** jede der Randschichten aus einem wirrgelegten Vliesstoff aus schmelzgesponnenen Polyester Bikomponentenfilamenten besteht, der kreuzgelegt und genadelt wurde, um eine Vliesstoffmatte zu bilden, und die während des Formens des Sandwichaufbaus zusammengedrückt wurde, um eine kompakte Randschicht mit verfestigten Filamenten zu bilden, die mit dem Kern verbunden ist.

2. Sandwichaufbau nach Anspruch 1, wobei der Kern ein Polyester-Wabenaufbau ist.

3. Sandwichaufbau nach Anspruch 1 oder 2, wobei die schmelzgesponnenen Filamente einen Durchmesser in dem Bereich von 16 bis 37 Mikrometer haben.

4. Sandwichaufbau nach Anspruch 1 oder 2, wobei die Randschichten ein Flächengewicht zwischen 400 und 1200 gm⁻² haben.

5. Sandwichaufbau nach einem der vorhergehenden Ansprüche, wobei die Randschichten eine Dicke von 1-3 mm, vorzugsweise 1-2,5 mm, haben.

6. Automobilteil mit einem Sandwichaufbau nach einem der vorhergehenden Ansprüche, das als Boden oder Hutablage oder Unterboden oder Motorabdeckhaube oder Motorraumabdeckung oder Motorschild verwendet wird.

7. Automobilteil nach Anspruch 6, das eine zusätzliche Teppichschicht umfasst, die entweder aus einem Tufting-Teppich oder einem Vliesstoff-Teppich hergestellt ist.

8. Automobilteil nach Anspruch 6, das wenigstens teilweise ein Hitzeschild umfasst.

## Revendications

1. Construction en sandwich pour des applications automobiles, comportant une âme en nid d'abeilles recouverte sur ses deux faces d'une peau, **caractérisée en ce que** chacune des deux peaux est constituée d'une nappe de filaments polyester bi-composant filés par fusion disposés de façon aléatoire, nappe qui a été superposée transversalement et aiguilletée pour former un matelas non tissé et qui a été comprimée durant le moulage de la construction en sandwich pour former une peau compacte avec des filaments liés, qui est liée à l'âme.

2. Construction en sandwich selon la revendication 1, dans laquelle l'âme est une construction en nid d'abeilles polyester.

3. Construction en sandwich selon la revendication 1 ou 2, dans laquelle les filaments filés par fusion ont un diamètre de l'ordre de 16 à 37 microns.

4. Construction en sandwich selon la revendication 1 ou 2, dans laquelle les peau ont une masse surfacique située entre 400 et 1200 g.m⁻².

5. Construction en sandwich selon l'une quelconque des revendications précédentes, dans laquelle les peaux ont une épaisseur allant de 1 à 3 mm, de préférence de 1 à 2,5 mm.

6. Produit automobile présentant une construction en sandwich selon l'une quelconque des revendications précédentes utilisé comme plancher ou tablette arrière ou corps pour ecran sous carrosserie ou couvre moteur ou habillage compartiment moteur ou ecran de protection moteur.

7. Produit automobile selon la revendication 6, comportant une couche de tapis supplémentaire réalisée soit dans un tapis touffeté soit dans un tapis non tissé.

8. Produit automobile selon la revendication 6, comportant au moins partiellement un protecteur thermique.
